(19) Europäisches Patentamt
European Patent Office
Office européen des brevets

(11) Veröffentlichungsnummer: **0 389 902**
**A1**

# (12) EUROPÄISCHE PATENTANMELDUNG

(21) Anmeldenummer: **90105076.5**

(22) Anmeldetag: **17.03.90**

(51) Int. Cl.5: **C08G 65/40, C08G 65/38**

(30) Priorität: **30.03.89 DE 3910279**

(43) Veröffentlichungstag der Anmeldung:
**03.10.90 Patentblatt 90/40**

(84) Benannte Vertragsstaaten:
**DE FR GB IT**

(71) Anmelder: **BAYER AG**

**D-5090 Leverkusen 1 Bayerwerk(DE)**

(72) Erfinder: **Kern, Sabine, Dr.**
**Trajanstrasse 25**
**D-4130 Moers(DE)**
Erfinder: **Karsten, Idel, Dr.**
**Am Schwarzkamp 38**
**D-4150 Krefeld(DE)**
Erfinder: **Eckhardt, Volker, Dr.**
**Bodelschwinghstrasse 14**
**D-4150 Krefeld(DE)**
Erfinder: **Freitag, Dieter, Dr.**
**Hasenheide 10**
**D-4150 Krefeld(DE)**

## (54) Verfahren zur Herstellung von aromatischen Polyätherketonen.

(57) Die Erfindung betrifft ein Verfahren zur Herstellung kristalliner, aromatischer Polyetherketone mit hohem Molekulargewicht, hoher Temperaturbeständigkeit, hoher Beständigkeit gegen die Einwirkung von Chemikalien, sowie guten mechanischen Eigenschaften.

EP 0 389 902 A1

Xerox Copy Centre

## Verfahren zur Herstellung von aromatischen Polyetherketonen

Die Erfindung betrifft ein Verfahren zur Herstellung kristalliner, aromatischer Polyetherketone mit hohem Molekulargewicht, hoher Temperaturbeständigkeit, hoher Beständigkeit gegen die Einwirkung von Chemikalien, sowie guten mechanischen Eigenschaften.

Kristalline, aromatische Polyetherketone sind bekannt. Sie lassen sich herstellen z.B. durch eine elektrophile aromatische (Friedel-Crafts-katalysierte) Substitutionsreaktion von aromatischen Diacylhalogeniden z.B. mit Diphenylether (US-A 3 065 205).

Ein anderes Verfahren ist z.B. eine nucleophile aromatische Subsitution (Johnson et al. J. Polym. Sci. A-1, 5 (1967) 2375). So können Polyetherketone beispielsweise durch Umsetzung von Ketogruppen-haltigen Halogenphenolen mit Alkalicarbonat in polaren Lösungsmitteln, wie N-Methylpyrrolidon, und aliphatischen oder aromatischen Sulfonen bei 200 - 400 °C hergestellt werden (US-A 4 113 699).

Ein weiteres Verfahren ist die Umsetzung von zweiwertigen, ein- oder mehrkernigen Phenolen mit aktivierten Dihalogenaromaten z.B. DE-A 1 545 106, DE-A 2 220 079, EP-A 1 879, CA-A 847 963, US-A 4 113 699). Die Bildung der Phenolat-Ionen erfolgt entweder durch Umsetzen des Phenols mit z.B. Alkalihydroxiden und anschließendes Entfernen des Reaktionswassers oder durch Zufügen von Alkalicarbonaten oder -hydrogencarbonaten zu der Kondensationsmischung. Als Alkalicarbonate werden insbesondere Natrium- oder Kaliumcarbonat verwendet.

Bei der Herstellung von Polyetherketonen sollen zur Erzielung guter Ausbeuten und hoher Molekulargewichte die Lösungsmittel, in denen die Kondensation durchgeführt wird, bestimmte Eigenschaften aufweisen. So wird beispielsweise bei Verwendung eines aliphatischen Sulfons als Lösemittel während der Reaktion eine unerwünschte Gelierung des Ansatzes oder Verfärbung beobachtet. Die Reaktion dauert lange Zeit und erfordert sehr hohe Temperaturen. Werden beispielsweise Benzophenone als Lösemittel verwendet, so können nur Oligomere erhalten werden (US-A 4 010 147).

Nur in Gegenwart von Difluorbenzophenon werden Polymere erhalten (EP-A 1879). Diese sind jedoch teuer und unwirtschaftlich. Chlorierte Verbindungen konnten bislang noch nicht mit befriedigenden Ausbeuten polykondensiert werden. Aus der DE-A 2 220 079 ist bekannt, aus Dihalogenaromaten wie Dihalogensulfonen und Dihydroxyaromaten in $C_1$-$C_4$-Alkyllactamen als Lösungsmittel in Gegenwart einer Base, vorzugsweise Natriumcarbonat, aromatische Polymere herzustellen.

Es wurde nun gefunden, daß bei Verwendung N-alkylierter Caprolactame als Lösungsmittel aus Dichlorketonen kristalline, hochmolekulare aromatische Polyetherketone hergestellt werden können, wenn die Reaktionspartner kontinuierlich unter gleichzeitiger Entfernung des Reaktionswassers zusammengeführt werden.

Der Vorteil dieser Verfahrensweise ist, daß längere Verweilzeiten des Wassers vermieden werden und mögliche Nebenreaktionen eingeschränkt werden können. Außerdem kann der Verlauf der Umsetzung über die Dosierungsrate gesteuert werden. Dies ist besonders dann von Vorteil, wenn Alkalicarbonate als Kondensationshilfsmittel verwendet werden und die Reaktionsgemische stark zum Schäumen neigen (z.B. durch Kohlendioxidentwicklung).

Gegenstand der Erfindung ist somit ein Verfahren zur Herstellung hochmolekularer, kristalliner Polyetherketone aus einer aromatischen Dihydroxy-Verbindung und einer aromatischen Dihalogen-Verbindung, welche eine Ketogruppe enthält und/oder einer aromatischen Monohalogenmonohydroxierverbindung, welche eine Ketogruppe enthält, in N-$C_1$-$C_5$-Caprolactamen als Lösungsmittel und mit mindestens einer Base, dadurch gekennzeichnet, daß die Reaktionspartner kontinuierlich unter gleichzeitiger Entfernung des Reaktionswassers zusammengeführt werden.

Zur Herstellung der Polyetherketone können beispielsweise aromatische Dihydroxyverbindung mit freien Hydroxylgruppen mit einer aromatischen Dihalogen-Keto-Verbindung in einem N-alkylierten Caprolactam mit mindestens einer Alkaliverbindung umgesetzt werden (Reaktionsstyp 1) oder Monohydroxymonohalogen-Verbindungen mit einer freien Hydroxylgruppe in einem N-alkylierten Caprolactam mit mindestens einer Alkaliverbindung umgesetzt werden (Reaktionstyp 2).

Für das erfindungsgemäße Verfahren können als Dihydroxyverbindungen Phenole der Formel (I)

HO - Ar - OH (I),

in welcher

Ar für $C_6$- $C_{30}$- Arylen steht, eingesetzt werden.

Geeignete aromatische Dihydroxyverbindungen sind meta-, ortho- und para-Bisphenole. Sie sind bekannt, z.B. einkernige Bisphenole wie Hydrochinon, mehrkernige Dihydroxyverbindungen wie 4,4′-Dihydroxydiphenyl, 2,2-Bis-(4-hydroxyphenyl)propan, Bis-(4-hydroxyphenyl)-methan, 4,4′-Dihydroxybenzophenon, 4,4′-Dihydroxydiphenylether, 4,4′-Dihydroxydiphenylsulfid, 1,4-Bis-(4-hydroxybenzoyl)-benzol, 1,3-Bis-(4-hydroxybenzoyl)-benzol, sowie deren kernsubstituierte Derivate, usw. Sie können allein oder als Gemisch eingesetzt werden.

Bevorzugt werden 4,4′-Dihydroxydiphenyl, Hydrochinon, 4,4′-Dihydroxydiphenylether und 4,4′-Dihydroxybenzophenon eingesetzt.

Für das erfindungsgemäße Verfahren können aromatische Dihalogen-Ketoverbindungen der Formel (II)

X - Ar - X (II),

in welcher

Ar für $C_6$-$C_{30}$-Arylen steht, welcher mindestens eine Ketogruppe enthält und

X für Halogen wie Chlor in ortho- oder para-Position an dem jeweils letzten aromatischen Kern steht, eingesetzt werden.

Bevorzugte Dihalogen-Ketoverbindungen entsprechen den Formeln (III), (IV) oder (V)

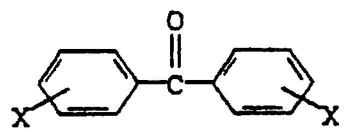

(III),

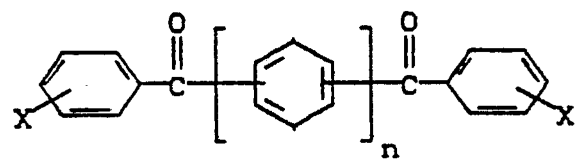

(IV),

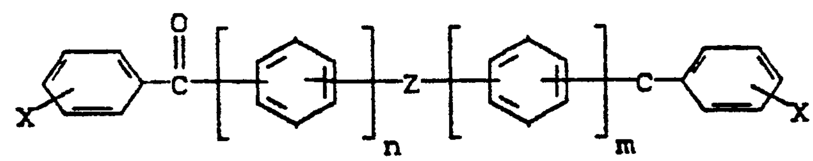

(V)

**in welchen**

X die bei Formel (II) angegebene Bedeutung hat,

Z für eine Ethergruppe eine Thioethergruppe, eine Carbonylgruppe, eine Sulfongruppe, oder eine einfache Bindung steht,

n und m unabhängig voneinander für die Zahlen 0,1,2,3,4,5 bis 10, stehen.

Erfindungsgemäß geeignete aromatische Dihalogen-Ketoverbindungen sind Dichlorverbindungen beispielsweise 4,4′-Dichlorbenzophenon, 2,4′-Dichlorbenzophenon, 1,4-Bis-(4-chlorbenzoyl)benzol, 1,3-Bis-(4-chlorbenzoyl)benzol, 4,4′-Bis-(4-chlorbenzoyl)biphenyl, 4,4′-Bis-(4-chlorbenzoyl)diphenylether, usw. Sie können allein oder als Gemische eingesetzt werden.

Die Dihalogen-Ketoverbindungen der Formel (II) haben bevorzugt ein Chloratom in para-Position am jeweilig letzten aromatischen Kern.

Mit Chlor substituierte aromatische Dihalogenverbindungen sind leichter herstellbar als die sonst verwendeten Difluorverbindungen und wesentlich preisgünstiger. Sie sind unter den erfindungsgemäßen Reaktionsbedingungen ausreichend reaktionsfähig.

Besonders bevorzugte aromatische Dihalogen-Ketoverbindungen sind 4,4′-Dichlorbenzophenon, 1,4-Bis-(4-chlorbenzoyl)benzol und 4,4′-Bis-(4-chlorbenzoyl)diphenylether.

Erfindungsgemäß geeignete Monohydroxymonohalogen-Verbindungen entsprechen vorzugsweise der Formel (VI)

X - Ar - OH (VI),

in welcher

X für Halogen wie Chlor steht, X und OH in ortho-oder para-Position am jeweils letzten aromatischen Rest stehen, und

Ar die bei Formel (II) angegebene Bedeutung hat.

Bevorzugte Monohydroxymonohalogenverbindungen sind beispielsweise 4-Chlor-4'-hydroxybenzophenon, 4- (4-Chlorbenzoyl)-4'-hydroxybiphenyl, 4-(4-Chlorbenzoyl)-4'-hydroxydiphenylether, 4-Chlor-4'-hydroxyterephthalophenon, 4-Chlor-4'-hydroxyisophthalophenon, 4-Chlorphenol, 4-Chlor-4'-hydroxybiphenyl usw. Die Monohydroxymonohalogenverbindungen können allein oder als Mischung eingesetzt werden.

Besonders bevorzugte Monohydroxymonohalogenverbindung ist 4-Chlor-4'-hydroxybenzophenon.

Es können auch äquivalente Mischungen aus Verbindungen der Formeln (I), (II), (III), (IV), (V), (VI) eingesetzt werden.

Im erfindungsgemäßen Verfahren wird als Lösemittel vorzugsweise N-Methylcaprolactam, N-Ethylcaprolactam, N-Propylcaprolactam, N-Isopropylcaprolactam eingesetzt, besonders bevorzugt H-Methylcaprolactam.

Der besondere Vorteil der erfindungsgemäß verwendeten Lösungsmittel liegt darin daß sie bei Raumtemperatur flüssig sind und einen sehr hohen Siedepunkt besitzen, thermisch stabil und stark polar sind.

Die erfindunggemäß verwendeten Lösungsmittel können allein oder als Gemisch eingesetzt werden. Sie können auch als Mischung mit bisher bekannten Lösungsmitteln wie Diphenylsulfon oder Benzophenon eingesetzt werden.

Erfindungsgemäß geeignete Basen sind vorzugsweise Alkalisalze (Na-, K-Salze) wie Alkalicarbonate, -hydroxide, -hydrogencarbonate, -fluoride, -hydride, -$C_1$-$C_{10}$-alkoxide (z.B. Methylate, Ethylate) und -$C_1$-$C_{10}$-alkylate (z.B. Ethyle Butyle).

Bevorzugt sind Alkalicarbonate, gegebenenfalls in Mischung mit Alkalihydrogencarbonaten oder -hydroxiden. Besonders bevorzugt sind Kaliumcarbonat und Kaliumhydrogencarbonat und Mischungen aus Kaliumcarbonat und Kaliumhydrogencarbonat.

Pro Val Dihydroxyverbindungen der Formel (I) und/oder Monohydroxymonohalogenverbindung der Formel (VI) werden 1-2 Val bevorzugt 1-1,5 Val, besonders bevorzugt 1,2-1,4 Val Base eingesetzt.

Das erfindungsgemäße Verfahren kann kontinuierlich und diskontinuierlich, z.B. wie folgt durchgeführt werden:

Die Reaktionskomponenten mit Ausnahme der zu dosierenden Komponente, bzw. Komponenten werden im Lösungsmittel gelöst und die Mischung auf 100-300° C, bevorzugt 150-260° C, besonders bevorzugt auf 180-22° C erhitzt. Bei dieser Temperatur wird die zu dosierende Reaktionskomponente, gegebenenfalls auch mehrere Reaktionspartner über einen Zeitraum von 0.5 bis 12 Stunden, bevorzugt 1 bis 4 Stunden zudosiert. Die Dosierung kann in fester Form, in Suspension oder in Lösung erfolgen. Werden mehrere Komponenten zudosiert, so kann dies gleichzeitig oder auch nacheinander geschehen. Das gebildete Reaktionswasser kann durch ein zugesetztes Schleppmittel (z.B. Toluol) azetrop entfernt und anschließend das Schleppmittel durch Temperaturerhöhung abdestilliert werden. Werden wäßrige Lösungen zudosiert, so muß gegebenenfalls weiteres Schleppmittel zugegeben werden. Schließlich wird auf Reaktionstemperaturen von 200-400° C und 0.1 bis 24 Stunden, vorzugsweise 0.5 bis 12 Stunden, besonders bevorzugt 1 bis 6 Stunden bei dieser Temperatur gehalten.

Die Umsetzung erfolgt etwa äquivalent bezogen auf Hydroxygruppen und Halogengruppen.

Die Ketogruppen enthaltenden Verbindungen, z.B. aromatische Dihalogenketoverbindungen werden etwa äquimolar mit Verbindungen ohne Ketogruppen, z.B. aromatischen Dihydroxyverbindungen umgesetzt. Durch Variation dieses Verhältnisses kann das Molekulargewicht beeinflußt werden.

Als azeotropes Schleppmittel können Verbindungen eingesetzt werden, die mit Wasser ein Azeotrop bilden und bevorzugt einen niedrigeren Siedepunkt haben als das erfindungsgemäß eingesetzte Lösungsmittel, beispielsweise Aromaten wie Benzol, Toluol, Xylol, Mesitylen, Tetralin, usw., vorzugsweise Toluol und Mesitylen.

Erfindungsgemäß wird die Umsetzung bei einer Temperatur von 180° C bis 400° C, bevorzugt von 200° C bis 280° C, durchgeführt.

Erfindungsgemäß werden kristalline, aromatische Polyetherketone mit hohen Molekulargewichten von 1000 bis 500000 (Mw) und mit einer relativen Viskosität von 1,5 bis 4,5 (gemessen in Schwefelsäure in einer Konzentration von 1 g/100 ml) erhalten.

Die relative Viskosität kann nach der Formel

$$\eta_{rel} \frac{\eta}{\eta} o$$

berechnet werden, wobei $\eta o$ die Viskosität des verwendeten Lösemittels, $\eta$ die Viskosität der Polymerlösung und $\eta_{rel}$ die relative Viskosität bedeuten.

Die hochkristallinen, aromatischen Polyetherketone, die nach dem erfindungsgemäßen Verfahren hergestellt wurden, sind unlöslich in üblichen Lösemitteln und besitzen ausgezeichnete thermische Stabilität, Chemikalienresistenz sowie ausgezeichnete mechanische Eigenschaften. Sie können zur Herstellung von Formkörpern, Filmen, Fasern, Oberflächenbeschichtungen usw. verwendet werden. Sie können mit anderen

Polymeren abgemischt und verarbeitet werden und mit üblichen Füllstoffen, wie Glasfasern, Kohlefasern, Aramid-Fasern, Calciumcarbonat, Calciumsilicat und üblichen Zusatzstoffen wie Stabilisatoren, Pigmenten, Entformungsmitteln usw. abgemischt werden. Sie können aus Herstellung geformter Körper verwendet werden.

Beispiele

Beispiele 1-2 (Reaktionstyp 1)

In einem 3000 ml Dreihalsrundkolben mit einem Glasrührer und einem Wasserabscheider mit Rückflußkühler und Thermometer werden 1,0 Mol 4,4′-Dichlorbenzophenon, 1,0 Mol Hydrochinon, 1200 ml N-Methylcaprolactam und 360 ml Mesitylen vorgelegt. Die Reaktionsmischung wird unter Rühren aufgeheizt, bis eine Innentemperatur von 200° C erreicht wird. Bei dieser Temperatur werden über eine Feststoffdosiervorrichtung 1 Mol Kaliumcarbonat und 0,4 Mol Kaliumhydrogencarbonat über einen Zeitraum von 2 Stunden zudosiert. Das entstehende Reaktionswasser wird kontinuierlich abdestilliert. Nach Entfernen des Reaktionswassers wird auf 230° C aufgeheizt und für 9 Stunden weitergerührt.

Zur Koagulation des entstandenen Polymeren wird die noch heiße Reaktionsmischung in einer 10%igen wäßrigen Phosphorsäurelösung gefällt, anschließend das pulvrig ausgefallene Polymere abfiltriert und mehrmals mit Wasser aufgeschlämmt, bis es elektrolytfrei ist. Zur Entfernung eventuell vorhandener Restlösemittelmengen wird anschließend mit Methanol aufgekocht, abfiltriert und getrocknet. Die Ausbeute beträgt mehr als 90%. der Theorie.

Vom getrockneten Produkt wird in 100%iger Schwefelsäure in einer Konzentration von 1 g/100 ml die relative Viskosität bestimmt.

Beispiel 3 (Reaktionstyp 1)

In einem 3000 ml Dreihalsrundkolben mit einem Glasrührer und einem Wasserabscheider mit Rückflußkühler und Thermometer werden 1,0 Mol 4,4′-Dichlorbenzophenon, 1,0 Mol 4,4′-Dihydroxydiphenylether, 1200 ml N-Methylcaprolactam und 360 ml Mesitylen vorgelegt. Die Reaktionsmischung wird unter Rühren aufgeheizt, bis eine Innentemperatur von 200° C erreicht wird. Bei dieser Temperatur werden über eine Feststoffdosiervorrichtung 1 Mol Kaliumcarbonat und 0,4 Mol Kaliumhydrogencarbonat über einen Zeitraum von 2 Stunden zudosiert. Das entstehende Reaktionswasser wird kontinuierlich abdestilliert. Nach Entfernen des Reaktionswassers wird auf 230° C aufgeheizt und 3 Stunden weitergerührt.

Die Aufarbeitung erfolgt analog zu Beispiel 1.

Vom getrockneten Produkt wird in 100%iger Schwefelsäure in einer Konzentration von 1 g/100 ml die relative Viskosität bestimmt.

Beispiel 4 (Reaktionstyp 1)

In einem 3000 ml Dreihalsrundkolben mit einem Glasrührer und einem Wasserabscheider mit Rückflußkühler und Thermometer werden 1,0 Mol 4,4′-Dichlorbenzophenon, 1,0 Mol 4,4′-Dihydroxybenzophenon, 1200 ml N-Methylcaprolactam und 360 ml Mesitylen vorgelegt. Die Reaktionsmischung wird unter Rühren aufgeheizt, bis eine Innentemperatur von 200° C erreicht wird. Bei dieser Temperatur werden über eine Feststoffdosiervorrichtung 1 Mol Kaliumcarbonat und 0,4 Mol Kaliumhydrogencarbonat über einen Zeitraum von 2 Stunden zudosiert. Das entstehende Reaktionswasser wird kontinuierlich abdestilliert. Nach Entfernen des Reaktionswassers wird auf 230° C aufgeheizt und für 8 Stunden weitergerührt.

Die Aufarbeitung erfolgt analog zu Beispiel 1. Vom getrockneten Produkt wird in 100%iger Schwefelsäure in einer Konzentration von 1 g/100 ml die relative Viskosität bestimmt.

Beispiel 5 (Reaktionstyp 1)

In einem 3000 ml Dreihalsrundkolben mit einem Glasrührer und einem Wasserabscheider mit Rückflußkühler und Thermometer werden 1,0 Mol 1,4-Bis-(4-chlorbenzoyl)-benzol, 1,0 Mol Hydrochinon, 1200 ml N-Methylcaprolactam und 360 ml Mesitylen vorgelegt. Die Reaktionsmischung wird unter Rühren aufgeheizt, bis eine Innentemperatur von 200° C erreicht wird. Bei dieser Temperatur werden über eine Feststoffdosiervorrichtung 1 Mol Kaliumcarbonat und 0,4 Mol Kaliumhydrogencarbonat über einen Zeitraum von 2 Stunden zudosiert. Das entstehende Reaktionswasser wird kontinuierlich abdestilliert. Nach Entfernen des Reaktionswassers wird auf 230° C aufgeheizt und für 9 Stunden weitergerührt.

Die Aufarbeitung erfolgt analog zu Beispiel 1. Vom getrockneten Produkt wird in 100%iger Schwefelsäure in einer Konzentration von 1 g/100 ml die relative Viskosität bestimmt.

Beispiel 6 (Reaktionstyp 1)

In einem 3000 ml Dreihalsrundkolben mit einem Glasrührer und einem Wasserabscheider mit Rückflußkühler und Thermometer werden 1,0 Mol 4,4′-Bis-(4-chlorbenzoyl)diphenylether, 1,0 Mol Hydrochinon, 1200 ml N-Methylcaprolactam und 360 ml Mesitylen vorgelegt. Die Reaktionsmischung wird unter Rühren aufgeheizt, bis eine Innentemperatur von 200° C erreicht wird. Bei dieser Temperatur werden über eine Feststoffdosiervorrichtung 1 Mol Kaliumcarbonat und 0,4 Mol Kaliumhydrogencarbonat über einen Zeitraum von 2 Stunden zudosiert. Das entstehende Reaktionswasser wird kontinuierlich abdestilliert Nach Entfernen des Reaktionswassers wird auf 230° C aufgeheizt und für 9 Stunden weitergeführt.

Die Aufarbeitung erfolgt analog zu Beispiel 1. Vom getrockneten Produkt wird in 100%iger Schwefelsäure in einer Konzentration von 1 g/100 ml die relative Viskosität bestimmt.

Beispiel 7 (Reaktionstyp 2)

In einem 3000 ml Dreihalsrundkolben mit einem Glasrührer und einem Wasserabscheider mit Rückflußkühler und Thermometer werden 2,0 Mol 4-Chlor-4′-hydroxybenzo phenon, 1200 ml N-Methylcaprolactam und 360 ml Mesitylen vorgelegt. Das Reaktionsverfahren läuft analog zum Reaktionstyp 1 ab. Es werden 1 Mol Kaliumcarbonat und 0,4 Mol Kaliumhydrogencarbonat über einen Zeitraum von 2 Stunden zudosiert.

In der Tabelle 1 sind die hergestellten Polymere zusammengestellt.

**Tabelle 1**

| Beisp. | Reaktionskomponenten | gebildete Polymerstruktur | rel. Viskosität |
|---|---|---|---|
| 1 | 4,4'-Dichlorbenzophenon Hydrochinon | 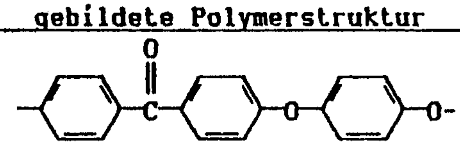 | 3,19 |
| 2 | 4,4'-Dichlorbenzophenon Hydrochinon | 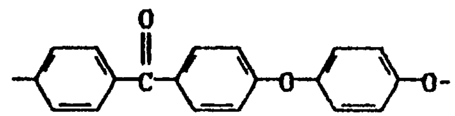 | 2,72 |
| 3 | 4,4'-Dichlorbenzophenon 4,4'-Dihydroxydiphenylether | 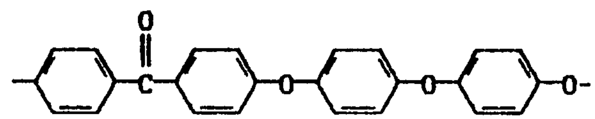 | 2,06 |
| 4 | 4,4'-Dichlorbenzophenon 4,4'-Dihydroxybenzophenon | 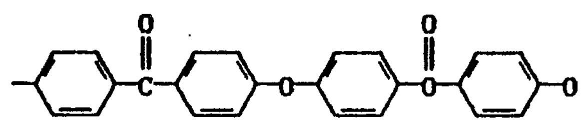 | 1,532 |
| 5 | 1,4-Bis-(4-chlorbenzoyl)-benzol Hydrochinon | 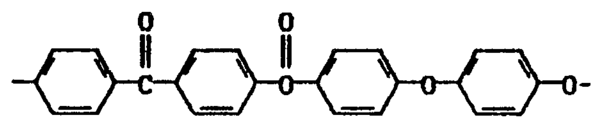 | 1,634 |
| 6 | 4,4-Bis-(4-chlorbenzoyl)-diphenylether Hydrochinon | 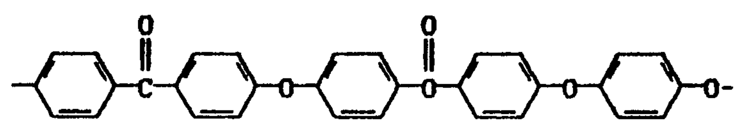 | 1,742 |
| 7 | 4-Chlor-4'-hydroxybenzophenon | 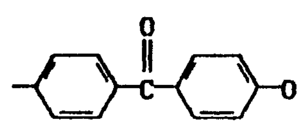 | 1,924 |

Ansprüche

1. Verfahren zur Herstellung hochmolekularer, kristalliner aromatischer Polyetherketone aus einer aromatischen Dihydroxy-Verbindung und einer aromatischen Dihalogen-Verbindung, welche eine Ketogruppe enthält und/oder einer aromatischen Monohalogenmonohydroxyverbindung, welche eine Ketogruppe enthält, in N-$C_1$-$C_5$-Caprolactam als Lösungsmittel und mit mindestens einer Base, dadurch gekennzeichnet, daß die Reaktionspartner kontinuierlich unter gleichzeitiger Entfernung des Reaktionswassers zusammengeführt werden.

2. Verfahren nach Anspruch 1, dadurch gekennzeichnet, daß aromatische Dihdroxyverbindungen der Formel I

HO - AR - OH (I)

in welcher

Ar für $C_6$-$C_{30}$-Arylen steht,

eingesetzt werden.

3. Verfahren nach Anspruch 1, dadurch gekennzeichnet, daß aromatische Dihalogenverbindungen der Formel (II)

x - Ar - X (II)

in welcher

Ar für $C_6$-$C_{30}$-Arylen steht, welcher mindestens eine Ketogruppe enthält und

X für Chlor in ortho- oder para-Position an dem jeweils letzten aromatischen Kern steht, eingesetzt werden.

4. Verfahren nach Anspruch 1, dadurch gekennzeichnet, daß aromatische Monohydroxymonohalogenverbindung der Formel (IV)

HO - Ar - X (IV),

in welcher

Ar für $C_6$-$C_{30}$ Arylen,

X für Halogen wie Chlor steht,

X und OH in ortho- oder para-Position am jeweils letzten aromatischen Rest stehen,

eingesetzt werden.

5. Verfahren nach Anspruch 1, dadurch gekennzeichnet, daß als Base Kaliumcarbonat, gegebenenfalls in Kombination mit Kaliumhydrogen-carbonat, -fluorid oder -hydroxid verwendet wird.

6. Verfahren nach Anspruch 1, dadurch gekennzeichnet, daß die Dichlorverbindung 4,4′-Dichlorbenzophenon, Bis-1,4-(4-chlorbenzoyl)benzol oder Bis-4,4′-(4-chlorbenzoyl)diphenylether ist.

7. Verfahren nach Anspruch 1, dadurch gekennzeichnet, daß die aromatische Dihydroxyverbindung Hydrochinon ist.

8. Verfahren nach Anspruch 1, dadurch gekennzeichnet, daß das verwendete Lösungsmittel N-Methylcaprolactam ist.

Europäisches Patentamt

# EUROPÄISCHER RECHERCHENBERICHT

Nummer der Anmeldung

EP 90 10 5076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 307 710 (BAYER)<br>* Ansprüche; Beispiele; Seite 4, Zeilen 4-15 * | 1-8 | C 08 G 65/40<br>C 08 G 65/38 |
| A,D | DE-B-2 220 079 (INVENTA)<br>* Ansprüche 1,6,8; Spalte 3, Zeile 58 - Spalte 4, Zeile 58 * | 1-8 | |
| A | JOURNAL OF MACROMOLECULAR SCIENCE C 27, Nr. 2, Mai 1987, Seiten 313-341, New York, US; M.J. MULLINS et al.: "The Synthesis and Properties of Poly(Aromatic Ketones)" * Seiten 325-335 * | 1-7 | |
| A | DE-B-2 730 128 (ICI)<br>* Ansprüche 1,2; Spalte 3, Zeilen 25-55 * & US-A-4113699 (Kat. D) | 1-7 | |
| A,D | EP-A-0 001 879 (ICI)<br>* Ansprüche 7-13 * | 1-5 | **RECHERCHIERTE SACHGEBIETE (Int. Cl.5)**<br>C 08 G |

Der vorliegende Recherchenbericht wurde für alle Patentansprüche erstellt

| Recherchenort | Abschlußdatum der Recherche | Prüfer |
|---|---|---|
| BERLIN | 06-07-1990 | BOEKER R.B. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)